# EUROPÄISCHE PATENTSCHRIFT

(11) **EP 2 585 375 B1**
(45) Veröffentlichungstag und Bekanntmachung des Hinweises auf die Patenterteilung: **20.08.2014**
(21) Anmeldenummer: 11726807.8
(22) Anmeldetag: 22.06.2011
(51) Int. Cl.: B65B 23/08, B65G 59/02

(54) **VORRICHTUNG ZUM TRANSPORT VON EINEM MIT OFFENEN EIERVERPACKUNGEN GEBILDETEN STAPEL, SOWIE EINE VEREINZELUNGSVORRICHTUNG FÜR DIE EIERVERPACKUNGEN UND EINE STAPELVORRICHTUNG FÜR DIE ENTLEERTEN EIERVERPACKUNGEN**
MACHINE FOR CONVEYING A STACK OF OPEN EGG CARTONS, AS WELL AS A SINGULATING APPARATUS FOR THE EGG CARTONS AND A STACKING DEVICE FOR THE EMPTIED EGG CARTONS.
MACHINE POUR TRANSPORTER UNE PILE DE BOITES A OEUFS OUVERTES, AINSI QU' UN APPAREIL DE SEPARATION DES BOITES ET UN DISPOSITIF D'EMPILAGE DES BOITES VIDEES

(30) Priorität: 23.06.2010 DE 102010017544
(43) Veröffentlichungstag der Anmeldung: 01.05.2013
(73) Patentinhaber: Bergmeier, Gerd, 32120 Hiddenhausen (DE)
(72) Erfinder: Bergmeier, Gerd, 32120 Hiddenhausen (DE)
(74) Vertreter: Dantz, Jan Henning
(86) Internationale Anmeldenummer: PCT/EP2011/060427
(87) Internationale Veröffentlichungsnummer: WO 2011/161147

(56) Entgegenhaltungen:
- GB-A- 2 033 331
- NL-A- 8 302 210
- NL-A- 8 801 532
- US-A- 3 437 096
- US-A- 4 293 272
- US-A- 4 302 142

## Beschreibung

Die Erfindung betrifft eine Vorrichtung zum Transport von aus mehreren übereinander angeordneten mit rohen Eiern bestückten offenen Eierverpackungen gebildeten Stapel, sowie eine Vereinzelungsvorrichtung für die Eierverpackungen und eine Stapelvorrichtung für die entleerten Eierverpackungen.

In Betrieben zur Herstellung von Nahrungsmitteln werden gekochte Eier in relativ großen Mengen verarbeitet. Die rohen Eier werden in speziell dafür ausgelegten Eierkochmaschinen gekocht und anschließend geschält.

Es hat sich herausgestellt, dass eine optimale Verarbeitung der Eier gegeben ist, wenn die rohen Eier eine gewisse Zeit in einem Kühlhaus gelagert werden. Von den Betrieben mit Legehennenhaltung werden die Eier in die Eierverpackungen eingebracht. Diese Eierverpackungen werden auch als Höckerlagen bezeichnet. Es handelt sich dabei um Formteile, die beidseitig mit Erhöhungen und Vertiefungen versehen sind. Es wird jedoch nur eine Seite mit Eiern bestückt. Diese Seite ist so ausgelegt, dass die Eier optimal gegen Beschädigung bzw. Bruch der Eierschalen geschützt sind. Die Eierverpackungen können jeweils 30 Eier aufnehmen, und sie werden als 30er Eierverpackung bezeichnet. Dabei sind die Eier reihenweise angeordnet, wobei in einer Reihe fünf Eier und in der rechtwinklig dazu verlaufenden Reihe sechs Eier angeordnet sind. Zur späteren Entnahme der Eier werden diese stets mit der Spitze nach oben, d.h. die Spitzen der Eier stehen gegenüber der Eierverpackung vor, in die Eierverpackungen eingebracht. Die Eierverpackungen sind ferner so gestaltet, dass mehrere Eierverpackungen übereinander in einem Stapel angeordnet werden können. Üblicherweise werden sechs Eierverpackungen in einem Stapel abgelegt. Die Eierverpackungen werden wechselweise in einer um 90° gedrehten Lage zueinander angeordnet, d.h., in einer bestimmten und gleichbleibenden Richtung liegen bei einer Eierverpackung fünf Eier in der Reihe und in dem darüberliegenden Eierverpackungen sechs Eier. Jede Eierverpackung besteht aus einer die Eier aufnehmenden Stapelseite und einer auf die Eier der darunterliegenden Eierverpackung aufsetzenden Unterseite. Die Eierverpackungen sind ferner so gestaltet, dass die in der Stapelseite eingreifenden Spitzen möglichst flächig umgriffen sind, damit ein Bruch der Eierschalen vermieden wird.

Die Eierverpackungen werden überwiegend aus einem Material im Pressverfahren hergestellt, welches durch Recycling von Papier und Pappe erzeugt wurde. Dieses Material kann relativ viel Feuchtigkeit aufnehmen und diese Eierverpackungen sind mehrfach verwendbar, es kann jedoch nicht ausgeschlossen werden, dass sie beim Transport oder der Lagerung beschädigt werden.

Es sind deshalb auch schon Eierverpackungen aus einem Kunststoff bekannt.

Nach der Entnahme der Stapel aus dem Kühlhaus schlägt sich an den Eiern Feuchtigkeit nieder, die in die Eierverpackungen eindringt, wenn diese aus einem zellulosehaltigen Recyclingmaterial gefertigt sind. Dadurch wird die Stabilität der Eierverpackungen herabgesetzt. Es muss jedoch sichergestellt sein, dass sie trotzdem mittels eines Förderers zur weiteren Bearbeitung transportiert werden können.

Aus der gattungsfremden NL 8801532 sind Transportplattformen für Eierpackungen mit Zentrierelementen bekannt, die formschlüssig von unten in die Verpackungsunterseite eingreifen.

Weiter ist es aus der NL 8302210 bekannt, Eierverpackungen durch in deren Unterseite eingreifende Transportnocken zu bewegen.

Der Erfindung liegt die Aufgabe zugrunde, eine Vorrichtung der eingangs näher beschriebenen Art so auszubilden, dass die aus den Eierverpackungen gebildeten Stapel unabhängig von ihrer Beschaffenheit ohne Beschädigung von rohen Eiern transportiert werden können, und dass darüber hinaus die Entstapelung ohne manuelle Tätigkeiten durchführbar ist.

Die gestellte Aufgabe wird gelöst, indem die aus mehreren übereinander angeordneten Eierverpackungen gebildeten Stapel zur vollflächigen Abstützung der jeweils im Stapel unteren Eierverpackung auf Plattformen zu einer Entstapelstation transportierbar sind, und dass die Plattformen Stützplatten aufweisen, die mit Zentrierelementen versehen sind, die formschlüssig von der Unterseite her in die jeweils untere Eierverpackung im Stapel eingreifen.

Da die offene Eierverpackung als Formteil mit Einziehungen ausgebildet ist, ist unter einer vollflächigen Abstützung zu verstehen, dass die in einer Ebene liegenden Flächen in ihrer Gesamtheit sich auf der Stützplatte der Plattform ab stützen. Dadurch wird eine Verschiebbarkeit der einzelnen Eierverpackungen innerhalb des Stapels vermieden, da sinngemäß die in die Eierverpackungen eingebrachten Eier als Distanzhalter oder Abstandshalter zu sehen sind. Da die Zentrierelemente von der Unterseite her formschlüssig in die jeweils untere Eierverpackung im Stapel eingreifen, ist auch eine Verschiebung des Stapels auf der Stützplatte wirksam verhindert. Durch die vollflächige Abstützung in Verbindung mit den Zentrierelementen wird ein optimaler Schutz für die rohen Eier hergestellt.

Damit eine ausreichende Stabilität der Plattformen gegeben ist, ist vorgesehen, dass diese im Querschnitt U-förmig gestaltet sind, wobei die parallelen Stege einem aufgesetzten Stapel entgegengerichtet sind, d.h. da die Plattformen in einer horizontalen Ebene transportiert werden, zeigen diese parallelen Stege nach unten. Zur Vereinzelung der im Stapel angeordneten Eierverpackungen ist vorgesehen, dass die zu entstapelnde Plattform auf einen Hubtisch absetzbar ist, dass mittels mindestens eines Tasters, vorzugsweise eines berührungslosen Tasters, ein Antrieb des Hubtisches derart steuerbar ist, dass die jeweils obere Eierverpackung stets in gleicher Position hinsichtlich der Höhe steht, und dass über eine Steuerung nach jeder Entnahme einer Eierverpackung der Hubtisch um 90° drehbar ist. Dadurch stehen die aus den rohen Eiern gebildeten Reihen stets in gleicher Position zur Entstapelung.

In weiterer Ausgestaltung ist vorgesehen, dass die Vereinzelung der im Stapel angeordneten Eierverpackungen mittels einer Umsetzvorrichtung durchführbar ist, die mindestens zwei, vorzugsweise vier steuerbare Greiferarme aufweist, die längs einer horizontalen und vorzugsweise quer zur Förderrichtung der Plattformen verlaufenden Führungsbahn mittels eines steuerbaren Antriebes verfahrbar sind. Sofern diese Umsetzvorrichtung mit zwei Greiferarmen versehen ist, erfassen diese die offene Eierverpackung an zwei parallelen und einander gegenüberliegenden Längsseiten. Aufgrund der Flexibilität der Eierverpackungen ist es jedoch vorteilhaft, wenn die Umsetzvorrichtung mit vier Greiferarmen ausgestattet ist, die die Eierverpackung an allen vier Längskanten erfasst. Diese Umsetzvorrichtung ist ferner noch so gestaltet, dass sie auch in vertikaler Richtung verfahrbar ist, damit die Eier der darunterliegenden Eierverpackung aus den von der Unterseite der umzusetzenden Eierverpackung frei kommen.

In weiterer Ausgestaltung ist noch vorgesehen, dass die Greiferarme längs einer quer zur Transportrichtung der Plattformen verlaufenden Führungsbahn verfahrbar sind, so dass mittels der Greiferarme jede Eierverpackung auf einen Zwischenförderer absetzbar ist. Mittels dieses Zwischenförderers werden die Eierverpackungen zu der Entnahmestation für die Eier transportiert. Dies erfolgt in bekannter Weise über Saugnäpfe, die die Spitzen der Eier durch die Saugwirkung übernehmen. Sie werden dann in an sich bekannter Weise einer Maschine zur weiteren Bearbeitung zugeführt.

Eine platzsparende Ausführung ergibt sich, wenn der Zwischenförderer parallel und im Abstand zur Transportrichtung der Plattformen steht, und dass die Transportrichtung des Zwischenförderers entgegen der Transportrichtung der Plattformen verläuft. Dadurch wird außerdem der Verfahrweg für die Greiferarme minimiert, wodurch die Leistung der Vorrichtung optimiert ist. Die Eierverpackungen sind mehrfach bzw. vielfach verwendbar. Es muss jedoch sichergestellt sein, dass ein optimaler Schutz der rohen Eier gewährleistet ist. Es ist deshalb vorgesehen, dass der Zwischenförderer auslaufseitig oder diesem Zwischenförderer nachgeschaltet ein Sensor zur Zustandsermittlung der entleerten Eierverpackungen angeordnet ist.

Aus den wiederverwendbaren Eierverpackungen wird dann ein Stapel gebildet, während die nicht mehr verwendbaren Eierverpackungen ausgeschieden werden.

Zur Stapelbildung der leeren Eierverpackungen ist vorgesehen, dass diese nacheinander auf einen Stapeltisch abgesetzt werden. Da das Gewicht der Eierverpackungen relativ gering ist, die Erhöhungen der Stapelseite jedoch in die Einziehungen der Unterseite der jeweils nachfolgenden Eierverpackungen fest eingreifen sollen, um einen festen Stapel zu bilden, ist vorgesehen, dass nach jedem Ablegen einer Eierverpackung in dem sich bildenden Stapel mittels einer Andrückvorrichtung, die auf den Stapel abgesetzte Eierverpackung in die darunterliegende Eierverpackung gepresst wird. Diese Andrückvorrichtung besteht in bevorzugter Ausführung aus zwei schwenkbaren Andrückplatten, wobei die Schwenkachsen in der Antransportrichtung der zu stapelnden, leeren Eierverpackungen liegen. Soll jedoch eine Eierverpackung ausgeschieden werden, weil sie unbrauchbar ist, verbleiben die Andrückplatten in der Andrückstellung, d.h., in horizontaler Stellung, so dass die auszuscheidende Eierverpackung darüber hinweggleitet. Wenn eine zu stapelnde Elerverpackung antransportiert wird, stehen die Andrückplatten vertikal oder annähernd vertikal. Diese Eierverpackungen können dann manuell von einer Gleitbahn entnommen werden.

Zum Transport der Plattformen ist vorgesehen, dass diese mittels eines im Takt antreibbaren Umlaufförderers gezogen oder geschoben werden, und dass an dem Umlaufförderer in Abständen Mitnehmer angeordnet sind, die in an der Unterseite der Plattformen angeordnete Anschläge anliegen oder eingreifen. Dabei ist es dann vorteilhaft, wenn die Plattformen mit Laufrollen versehen sind, die sich auf ortsfesten Führungsschienen abwälzen.

Anhand der beiliegenden Zeichnungen wird die Erfindung noch näher erläutert.

Es zeigen:
- Figur 1: die erfindungsgemäße Vorrichtung zur Vereinzelung eines Stapels in perspektivischer Darstellung mit Blick auf die Transportstrecke für die Plattformen,
- Figur 2: eine der Figur 1 entsprechende Darstellung, jedoch von der Seite des Zwischenförderers gesehen.

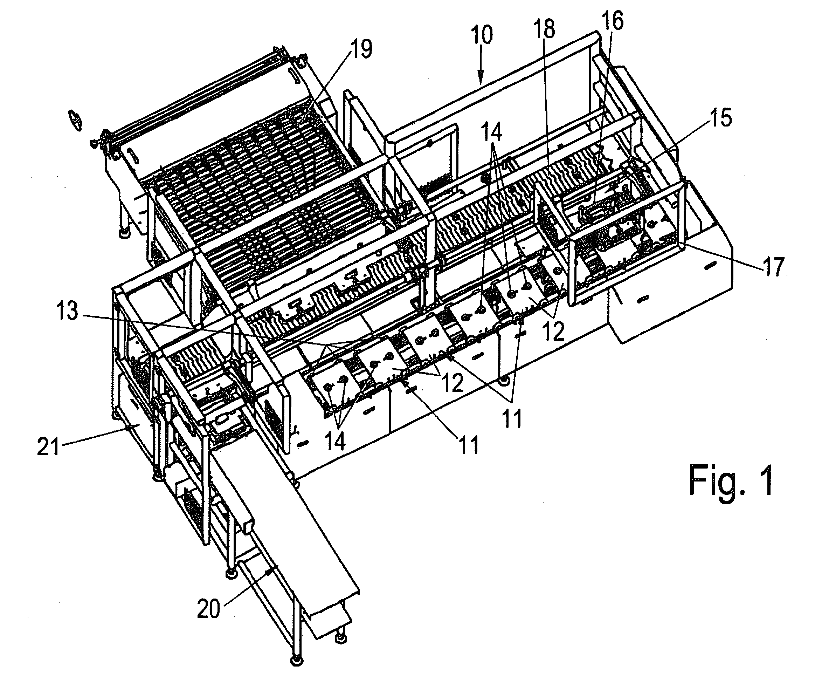

Die in der Figur 1 dargestellte Vorrichtung 10 zur Vereinzelung von mehreren mit rohen Eiern übereinander gestapelten offenen Eierverpackungen enthält einen ersten Horizontalförderer, der eine umlaufende Kette aufweist, die mit Mitnehmern versehen ist, dient zum Transport von Plattformen 11, auf denen die Stapel abgestellt werden. Wie die Figur 1 zeigt, enthält jede Plattform 11 eine ebene Stützplatte 12, die beidseitig mit Laufrollenpaaren 13 ausgestattet ist. Die Plattformen 11 sind an der Oberseite mit Zentrierkonen 14 versehen, damit sie stets in gleicher Position in eine Entstapelstation 15 transportiert werden können. Der erste Horizontalförderer wird taktmäßig angetrieben, da die Entstapelung der Eierverpackungen im Stillstand erfolgt. Dazu weist die Vereinzelungsstation 15 Greiferarme 16, 17 auf, die die Eierverpackung an allen vier Seiten erfassen und demzufolge die jeweilige obere Eierverpackung durch Schließen übernehmen, d.h. die Greiferarme 16, 17 werden aufeinander zu bewegt. Mittels eines nicht weiter dargestellten Antriebes werden die beiden Greiferarme 16, 17 dann quer zur Transportrichtung des ersten Horizontalförderers verfahren, bis dass sie oberhalb eines Zwischenförderers 18 stehen. Durch Absenken und anschließendes Öffnen der Greiferarme 16, 17 werden dann nacheinander die Eierverpackungen auf diesen Zwischenförderer 18 abgesetzt. Dieser wird ebenfalls taktmäßig angetrieben und in Richtung zu einem quer zu diesem Förderer arbeitenden Förderband 19 transportiert. Durch Saugnäpfe aufweisende Saugplatten werden die Eier aus der Eierverpackung herausgenommen und auf das Förderband 19 gelegt. Von dortaus werden sie einer weiteren Bearbeitungsmaschine, beispielsweise einer Kochmaschine zugeführt.

Wie die Figuren zeigen, steht der Zwischenförderer 18 parallel und im Abstand zum ersten Horizontalförderer. Dadurch wird eine platzsparende Ausführung erreicht. In nicht näher dargestellter Weise wird der zweite Horizontalförderer ebenfalls taktmäßig angetrieben.

Der zu entstapelnde Stapel verbleibt während der Entstapelung auf der Plattform 11. Dieser wird durch eine Hubvorrichtung stets angehoben, so dass die obere Eierverpackung auf gleicher Höhe steht. Die Steuerung erfolgt vorzugsweise durch mindestens einen berührungslos arbeitenden Taster, beispielsweise durch eine Lichtschranke. Nach jeder Entnahme einer Eierverpackung aus dem Stapel erfolgt eine Drehung der Plattform und somit des Stapels um 90°. Im Bereich des auslaufseitigen Endes oder im Bereich eines Zwischenförderers 18 ist eine Zustandsermittlung vorgesehen, die einen Sensor aufweist, um verschmutzte oder beschädigte Eierverpackungen zu erkennen und später auszuscheiden. In nicht näher dargestellter und erläuterter Weise können die wieder benutzbaren Eierverpackungen mittels einer Stapelbildeeinrichtung 21 gestapelt werden.

Nach jedem Aufsetzen einer leeren Eierverpackung auf dem sich bildenden Stapel erfolgt ein Andrücken dieser Eierverpackung, damit ein fester Stapel gebildet wird. Dies erfolgt durch Andrückklappen, die um horizontale Achsen schwenkbar sind. Diese Achsen verlaufen in Antransportrichtung der leeren Eierverpackungen. Eine auszuscheidende Eierverpackung gleitet über die Andrückklappen hinweg, da diese in einem solchen Falle in der Andrückstellung verbleiben. Die auszuscheidenden Eierverpackungen können dann von einer Gleitbahn 20 entnommen werden.

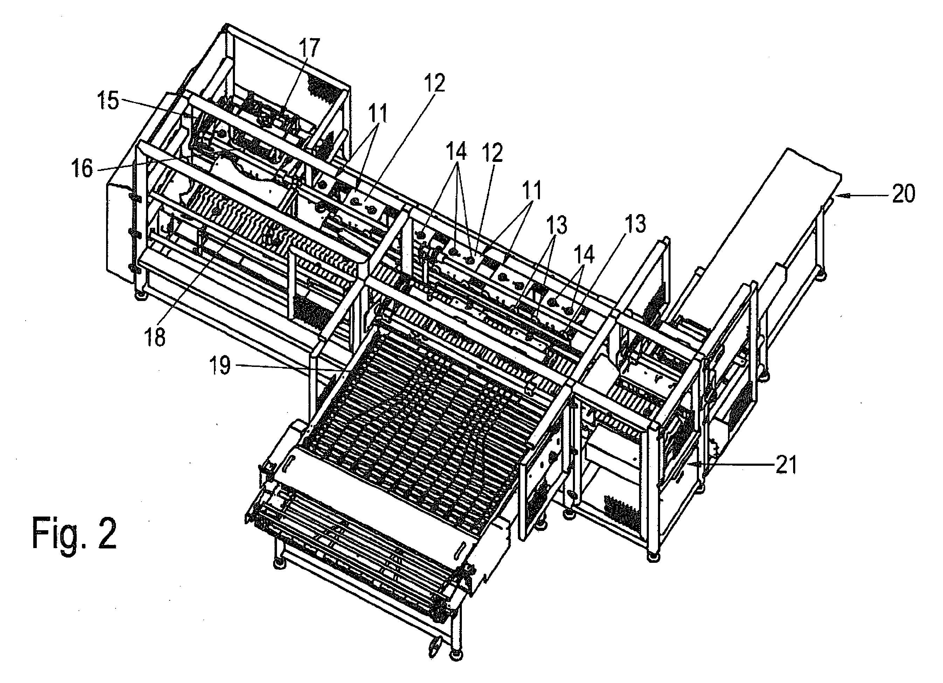

Die Figur 2 zeigt die Vorrichtung von der Seite aus, wo das Förderband 19 zum Transport der aus den Eierverpackungen entnommenen Eier zum Transport in eine Maschine zur Weiterverarbeitung angeordnet ist.

Die Erfindung ist nicht auf das dargestellte Ausführungsbeispiel beschränkt. Wesentlich ist, dass die aus den Eierverpackungen gebildeten Stapel auf Plattformen 11 abgestellt werden, die flächige Stützplatten aufweisen, damit die im Stapel untere Eierverpackung vollflächig abgestützt ist.

## Patentansprüche

1. Vorrichtung zum Transport von aus mehreren übereinander angeordneten mit rohen Eiern bestückten offenen Eierverpackungen gebildeten Stapel, sowie eine Vereinzelungsvorrichtung für die Eierverpackungen und eine Stapelvorrichtung für die entleerten Eierverpackungen, **dadurch gekennzeichnet, dass** die aus mehreren übereinander angeordneten Eierverpackungen gebildeten Stapel zur vollflächigen Abstützung der jeweils im Stapel unteren Eierverpackung auf Plattformen (11) zu einer Entstapelstation (15) transportierbar sind, und dass die Plattformen (11) Stützplatten (12) aufweisen, die mit Zentrierelementen (14) versehen sind, die formschlüssig von der Unterseite her in die jeweils untere Eierverpackung im Stapel eingreifen.

2. Vorrichtung nach Anspruch 1, **dadurch gekennzeichnet, dass** jede Plattform (11) im Querschnitt U-förmig gestaltet ist, wobei die parallelen Stege einem aufgesetzten Stapel entgegengerichtet sind.

3. Vorrichtung nach Anspruch 1 oder 2, **dadurch gekennzeichnet, dass** die zu entstapelnde Plattform (11) auf einen Hubtisch absetzbar ist, dass mittels mindestens eines Tasters, vorzugsweise eines berührungslosen Tasters, ein Antrieb des Hubtisches derart steuerbar ist, dass die jeweils obere Eierverpackung stets in gleicher Höhenposition steht, und dass über eine Steuerung nach jeder Entnahme einer Eierverpackung der Hubtisch um 90° drehbar ist.

4. Vorrichtung nach einem oder mehreren der vorstehenden Ansprüche, **dadurch gekennzeichnet, dass** die Vereinzelung der im Stapel angeordneten Eierverpackungen mittels einer Umsetzvorrichtung durchführbar ist, die mindestens zwei, vorzugsweise vier steuerbare Greiferarme (16, 17) aufweist, die längs einer Horizontalen und vorzugsweise quer zur Förderrichtung der Plattformen (11) verlaufenden Führungsbahn mittels eines steuerbaren Antriebes verfahrbar sind.

5. Vorrichtung nach Anspruch 4, **dadurch gekennzeichnet, dass** die die Greiferarme (16, 17) aufweisende Umsetzvorrichtung in vertikaler Richtung verfahrbar ist.

6. Vorrichtung nach einem oder mehreren der vorstehenden Ansprüche, **dadurch gekennzeichnet, dass** die Greiferarme längs einer quer zur Transportrichtung der Plattformen (11) verlaufenden Führungsbahn verfahrbar sind, und dass mittels der Greiferarme (16, 17) jede Eierverpackung auf einen Zwischenförderer (18) absetzbar ist.

7. Vorrichtung nach Anspruch 6, **dadurch gekennzeichnet, dass** der Zwischenförderer (18) parallel und im Abstand zur Transportrichtung der Plattformen (11) steht, und dass die Transportrichtung des Zwischenförderers (18) entgegen der Transportrichtung der Plattformen (11) verläuft.

8. Vorrichtung nach einem oder mehreren der vorstehenden Ansprüche, **dadurch gekennzeichnet, dass** der Zwischenförderer (18) auslaufseitig mit einem Sensor versehen ist, oder dass ein Sensor dem Zwischenförderer (18) nachgeschaltet ist, jeweils zur Zustandsermittlung der entleerten Eierverpackungen.

9. Vorrichtung nach einem oder mehreren der vorstehenden Ansprüche, **dadurch gekennzeichnet, dass** die wieder verwendbaren Eierverpackungen mittels einer Stapelbildeeinrichtung (21) stapelbar sind, und dass dem sich bildenden Stapel eine Andrückvorrichtung derart zugeordnet ist, dass die jeweils auf den Stapel abgesetzte Eierverpackung in die darunterliegende Eierverpackung pressbar ist.

10. Vorrichtung nach Anspruch 9, **dadurch gekennzeichnet, dass** die Andrückvorrichtung aus zwei schwenkbaren Andrückplatten besteht, wobei die Schwenkachsen in der Antransportrichtung der zu stapelnden leeren Eierverpackungen liegen, und dass die unbrauchbaren Eierverpackungen über die Andrückplatten in der Andrückstellung schiebbar und einer Gleitbahn (20) zuführbar sind.

## Claims

1. A device for transporting stacks formed from multiple open egg packages arranged one on top of another and equipped with raw eggs, and a separating device for the egg packages and a stacking device for the empty egg packages, **characterized in that** the stacks formed from multiple egg packages arranged one on top of another are transportable on platforms (11), for supporting the entire area of the respective bottom package in the stack, to a destacking station (15), and the platforms (11) have support plates (12), which are provided with centering elements (14), which engage in a formfitting manner from the bottom side in the respective bottom egg package in the stack.

2. The device according to Claim 1, **characterized in that** each platform (11) is designed as U-shaped in cross-section, the parallel webs of a placed stack being oriented in the opposite direction.

3. The device according to Claim 1 or 2, **characterized in that** the platform (11) to be destacked can be placed on a lift table, a drive of the lift table is controllable by means of a feeler, preferably a contactless feeler, in such a manner that the respective top egg package always stands in the same vertical position, and the lift table is rotatable by 90° via acontroller after each removal of an egg package.

4. The device according to one or more of the preceding claims, **characterized in that** the separation of the egg packages arranged in the stack can be carried out by means of a turning device, which has at least two, preferably four controllable gripper arms (16, 17), which are movable along a horizontal guide path, which preferably extends transversely to the conveyor direction of the platforms (11), by means of a controllable drive.

5. The device according to Claim 4, **characterized in that** the turning device having the gripper arms (16, 17) is movable in the vertical direction.

6. The device according to one or more of the preceding claims, **characterized in that** the gripper arms are movable along a guide path extending transversely to the transport direction of the platforms (11), and each egg package can be placed on an intermediate conveyor (18) by means of the gripper arms (16, 17).

7. The device according to Claim 6, **characterized in that** the intermediate conveyor (18) is located parallel and at a distance to the transport direction of the platforms (11), and the transport direction of the intermediate conveyor (18) extends opposite to the transport direction of the platforms (11).

8. The device according to one or more of the preceding claims, **characterized in that** the intermediate conveyor (18) is provided on the outlet side with a sensor, or a sensor is connected downstream from the intermediate conveyor (18), respectively for the state ascertainment of the emptied egg packages.

9. The device according to one or more of the preceding claims, **characterized in that** the reusable egg packages are stackable by means of a stacking unit (21), and a contact pressure device is to be assigned to the forming stack such that the respective egg package placed on the stack can be pressed into the egg package located underneath.

10. The device according to Claim 9, **characterized in that** the contact pressure device consists of two pivotable contact pressure plates, the pivot axes lying in the incoming transport direction of the empty egg packages to be stacked, and the unusable egg packages can slide over the contact pressure plates in the contact pressure position and can be supplied to a chute (20).

## Revendications

1. Dispositif pour le transport de piles formées de plusieurs plateaux à oeufs garnis d'oeufs frais et superposés ainsi que dispositif séparateur des plateaux et un dispositif d'empilage de plateaux vides,
dispositif **caractérisé en ce que**
pour soutenir sur toute sa surface le plateau à oeufs du dessous d'une pile, les piles formées de l'empilage de plusieurs plateaux à oeufs sont transportées sur des plateformes (11) vers le poste de dépilage (15) et **en ce que** les plateformes (11) comportent des plaques d'appui (12) munis d'éléments de centrage (14) qui pénètrent chaque fois dans le plateau à oeufs inférieur d'une pile par en-dessous avec une liaison par la forme.

2. Dispositif selon la revendication 1,
**caractérisé en ce que**
chaque plateforme (11) a une section en U et les entretoises parallèles de la pile placées au-dessus sont orientées en sens opposé.

3. Dispositif selon la revendication 1 ou 2,
**caractérisé en ce que**
- la plateforme (11) à dépiler est déposée sur une table élévatrice,
- à l'aide d'au-moins un palpeur, de préférence d'un palpeur sans contact, on commande l'entraînement du plateau élévateur de façon que le plateau à oeufs chaque supérieur respectif, se trouve à la même hauteur et qu'après le prélèvement d'un plateau à oeufs, une commande fait tourner la table élévatrice de 90°.

4. Dispositif selon l'une ou plusieurs des revendications précédentes,
**caractérisé en ce que**
la séparation des plateaux à oeufs de la pile se fait à l'aide d'un dispositif de déplacement qui comporte au moins deux, et de préférence quatre bras de préhension (16, 17), commandés en mouvement suivant la direction horizontale et de préférence transversalement au chemin guidage allant dans la direction de transfert des plateformes (11) à l'aide d'un entrainement commandé.

5. Dispositif selon la revendication 4,
**caractérisé en ce que**
le dispositif de conversion muni des bras de préhension (16, 17) est mobile dans la direction verticale.

6. Dispositif selon l'une ou plusieurs des revendications précédentes,
**caractérisé en ce que**
les bras de préhension sont mobiles le long d'un chemin de guidage orienté transversalement à la direction de transport des plateformes (11), et
les bras de préhension (16, 17), déposent chaque plateau à oeufs sur un convoyeur intermédiaire (18).

7. Dispositif selon la revendication 6,
**caractérisé en ce que**
le convoyeur intermédiaire (18) est parallèle et écarté de la direction de transport des plateformes (11), et
la direction de transport du convoyeur intermédiaire (18) est opposée à la direction de transport des plateformes (11).

8. Dispositif selon l'une ou plusieurs des revendications précédentes,
**caractérisé en ce qu'**
en sortie le convoyeur intermédiaire (18) est muni d'un capteur ou un capteur est prévu en aval du convoyeur intermédiaire (18), chaque fois pour déterminer l'état des plateaux vides.

9. Dispositif selon l'une quelconque des revendications précédentes,
**caractérisé en ce que**
les plateaux à oeufs réutilisables sont empilés à l'aide d'une installation d'empilage (21), et
un dispositif de compression est associé à la pile en formation de sorte que chaque emballage à oeufs déposé sur la pile puisse être pressé dans le plateau directement en-dessous.

10. Dispositif selon la revendication 9,
**caractérisé en ce que**
le dispositif de compression se compose de deux plaques de compression, pivotantes et les axes de pivotement se situent dans la direction de transport des plateaux vides, à empiler, et
les plateaux défectueux sont glissés par-dessus les plateaux comprimés en position de compression et sont conduits sur une glissière (20).
